# DEMANDE DE BREVET EUROPEEN

(11) **EP 3 025 904 A1**
(43) Date de publication de la demande: **01.06.2016**
(21) Numéro de dépôt: 15192019.6
(22) Date de dépôt: 29.10.2015
(51) Int. Cl.: B60N 2/48

(54) **SYSTÈME DE MONTAGE D'APPUI-TÊTE POUR SIÈGE DE VÉHICULE AUTOMOBILE**

(30) Priorité: 06.11.2014 FR 1460732
(71) Demandeur: Cera TSC, 75008 Paris (FR)
(72) Inventeur: DAUCHEZ, Fernand, 02400 Bezu Saint Germain (FR); GANIER, David, 02190 Guignicourt (FR); ZEDIAR, Ahmed, 51100 Reims (FR); HORNY, Frédéric, 51100 Reims (FR)
(74) Mandataire: Sayettat, Julien Christian

(57) **Abrégé**

L'invention concerne un système (1) comprenant au moins une tige (2) comprenant au moins un cran et une gaine (4) comprenant : un manchon (5) de réception de ladite tige en coulissement ; une pièce de blocage (6) montée mobile en translation radiale sur ledit manchon, ladite pièce comprenant un bord de blocage (7) ; un ressort (8) actionnant ladite pièce, ladite pièce présentant une position radiale de coulissement et une position radiale de crantage, où ledit bord s'insère dans ledit cran ; un moyen de déblocage (9) permettant un positionnement de ladite pièce en position de coulissement, ladite tige étant pourvue d'une saillie (10) radiale agencée pour pouvoir se mettre en butée avec ledit bord lorsque ladite pièce est en position radiale de coulissement.

## Description

L'invention concerne un système de montage d'appui-tête pour siège de véhicule automobile et un siège pourvu d'un tel système.

Il est connu de réaliser un système de montage d'appui-tête pour siège de véhicule automobile, ledit système comprenant au moins une tige - notamment en tube métallique - de montage dudit appui-tête sur un dossier dudit siège, ladite tige comprenant au moins un cran de réglage en hauteur dudit appui-tête, ledit système comprenant en outre une gaine de réception en coulissement de ladite tige, ladite gaine comprenant :
- un manchon de réception de ladite tige en coulissement,
- une pièce de blocage montée mobile en translation radiale sur ledit manchon, ladite pièce comprenant un bord de blocage agencé pour pouvoir s'insérer dans ledit cran,
- un ressort actionnant ladite pièce de sorte que ledit bord soit repoussé vers ladite tige, ladite pièce présentant une position radiale de coulissement, dans laquelle ledit bord peut coulisser contre ladite tige, et une position radiale de crantage, où ledit bord s'insère dans ledit cran de manière à bloquer ladite tige en coulissement,
- un moyen de déblocage - notamment sous forme de bouton poussoir solidaire de ladite pièce - permettant un positionnement de ladite pièce en position de coulissement afin de permettre le coulissement de ladite tige.

Il est connu par ailleurs de prévoir un cran anti-extraction destiné à garantir un maintien de la tige dans la gaine dans le cas où l'appui-tête est projeté vers le haut sous l'effet de son inertie en cas d'accident du véhicule, la pièce de blocage étant destinée à s'insérer, sous l'action du ressort, dans ledit cran pour bloquer le coulissement de la tige.

Cependant, dans le cas d'une projection trop rapide de l'appui-tête, la pièce de blocage peut ne pas avoir le temps de s'insérer dans le cran anti-extraction et l'appui-tête est alors projeté dans le véhicule, ce qui constitue un danger pour les occupants.

Pour pallier cet inconvénient, il est connu de prévoir l'utilisation d'un ressort de forte puissance, qui permette une insertion très rapide du bord de blocage dans le cran anti-extraction lorsque ils se retrouvent en vis-à-vis.

Cependant, l'utilisation d'un tel ressort est préjudiciable au bon coulissement de la tige, le bord de blocage se trouvant appuyé fortement contre ladite tige et freinant de façon excessive son déplacement.

En outre, l'effort à déployer pour extraire la tige d'un cran de réglage par le moyen de déblocage est lui aussi très important, ce qui occasionne un inconfort de manipulation pour l'utilisateur.

Enfin, le bord de blocage peut occasionner une rayure de la tige à la suite de coulissements répétés qui provoquent une abrasion de ladite tige par ledit bord.

L'invention a pour but de pallier ces inconvénients.

A cet effet, et selon un premier aspect, l'invention propose un système de montage d'appui-tête pour siège de véhicule automobile, ledit système comprenant au moins une tige - notamment en tube métallique - de montage dudit appui-tête sur un dossier dudit siège, ladite tige comprenant au moins un cran de réglage en hauteur dudit appui-tête, ledit système comprenant en outre une gaine de réception en coulissement de ladite tige, ladite gaine comprenant :
- un manchon de réception de ladite tige en coulissement,
- une pièce de blocage montée mobile en translation radiale sur ledit manchon, ladite pièce comprenant un bord de blocage agencé pour pouvoir s'insérer dans ledit cran,
- un ressort actionnant ladite pièce de sorte que ledit bord soit repoussé vers ladite tige, ladite pièce présentant une position radiale de coulissement, dans laquelle ledit bord peut coulisser contre ladite tige, et une position radiale de crantage, où ledit bord s'insère dans ledit cran de manière à bloquer ladite tige en coulissement,
- un moyen de déblocage - notamment sous forme de bouton poussoir solidaire de ladite pièce - permettant un positionnement de ladite pièce en position de coulissement afin de permettre le coulissement de ladite tige,
ladite tige étant pourvue d'une saillie radiale agencée pour pouvoir se mettre en butée avec ledit bord lorsque ladite pièce est en position radiale de coulissement, de manière à empêcher une extraction non voulue de ladite tige hors dudit manchon.

Dans cette description, les termes de positionnement dans l'espace (haut, inférieur, arrière, vertical, horizontal,...) sont pris en référence au système disposé en configuration d'utilisation dans le véhicule.

Le terme « radial » est quant à lui considéré relativement à l'axe selon lequel s'étend la tige.

Avec l'agencement proposé, on peut utiliser un ressort de faible puissance, l'anti-extraction de la tige étant garantie par la saillie qui joue son rôle indépendamment de la force du ressort.

Il en résulte un coulissement facilité de la tige, le bord de blocage se trouvant appuyé faiblement contre la tige lors du réglage en hauteur de l'appui-tête.

En outre, l'effort à déployer pour extraire la tige d'un cran de réglage par le moyen de déblocage est modéré, ce qui ce qui apporte un confort d'utilisation pour l'utilisateur.

Enfin, le risque de rayure de la tige par le bord de blocage est réduit.

Selon un deuxième aspect, l'invention concerne un siège de véhicule automobile pourvu d'un tel système.

D'autres particularités et avantages de l'invention apparaîtront dans la description qui suit, faite en référence aux figures jointes, dans lesquelles :
- la figure 1 est une vue schématique en coupe verticale partielle du système selon une réalisation, la pièce de blocage étant écartée vers l'extérieur de sa position radiale de coulissement par appui sur un deuxième pan biseauté de la saillie, de manière à permettre le montage de la tige dans la gaine,
- la figure 2 est analogue à la figure 1, la pièce de blocage étant en position radiale de coulissement du fait d'un réglage en hauteur de l'appui-tête,

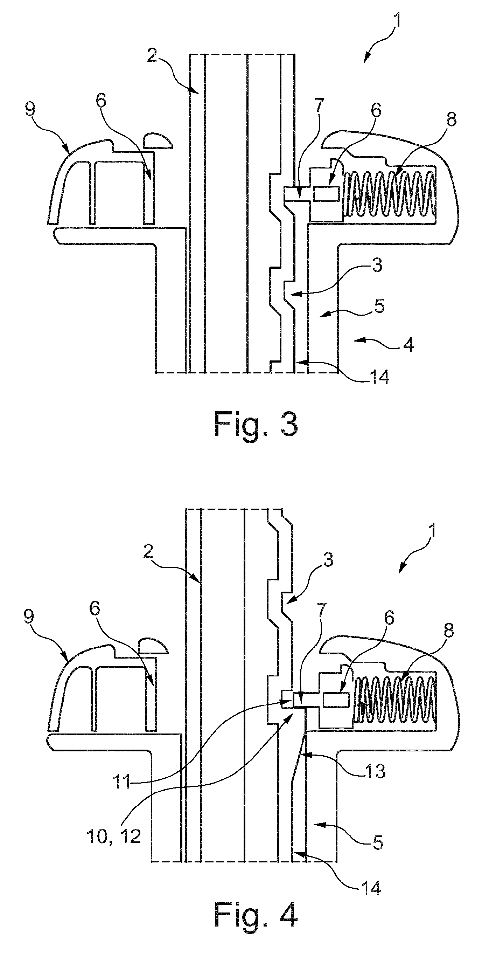

- la figure 3 est analogue à la figure 1, la pièce de blocage étant en position radiale de crantage lors d'un blocage en hauteur de l'appui-tête,
- la figure 4 est analogue à la figure 1, la pièce de blocage étant en position radiale de coulissement avec le bord de blocage en appui contre la saillie, du fait d'un manque de temps pour une insertion du bord de blocage dans le cran anti-extraction lors d'une projection de l'appui-tête.

En référence aux figures, on décrit un système 1 de montage d'appui-tête pour siège de véhicule automobile, ledit système comprenant au moins une tige 2 - notamment en tube métallique -de montage dudit appui-tête sur un dossier dudit siège, ladite tige comprenant au moins un cran de réglage 3 en hauteur dudit appui-tête, ledit système comprenant en outre une gaine 4 de réception en coulissement de ladite tige, ladite gaine comprenant :
- un manchon 5 de réception de ladite tige en coulissement,
- une pièce de blocage 6 montée mobile en translation radiale sur ledit manchon, ladite pièce comprenant un bord de blocage 7 agencé pour pouvoir s'insérer dans ledit cran,
- un ressort 8 actionnant ladite pièce de sorte que ledit bord soit repoussé vers ladite tige, ladite pièce présentant une position radiale de coulissement, dans laquelle ledit bord peut coulisser contre ladite tige, et une position radiale de crantage, où ledit bord s'insère dans ledit cran de manière à bloquer ladite tige en coulissement,
- un moyen de déblocage 9 - ici sous forme de bouton poussoir solidaire de ladite pièce - permettant un positionnement de ladite pièce en position de coulissement afin de permettre le coulissement de ladite tige,

ladite tige étant pourvue - ici en partie inférieure - d'une saillie 10 radiale agencée pour pouvoir se mettre en butée avec ledit bord lorsque ladite pièce est en position radiale de coulissement, de manière à empêcher une extraction non voulue de ladite tige hors dudit manchon.

Selon la réalisation représentée, la tige 2 est destinée à être partie de l'appui-tête et la gaine 4 est destinée à être montée en haut de dossier du siège.

Selon la réalisation représentée, la tige 2 comprend un cran anti-extraction 11, la saillie 10 étant disposée par rapport audit cran de manière à garantir un maintien de ladite tige dans la gaine 4 dans le cas où le bord de blocage 7 ne s'insère pas dans ledit cran, en cas d'une projection trop rapide de l'appui-tête. En particulier, la saillie 10 est disposée à proximité - ici en dessous - du cran 11.

Selon la réalisation représentée, la saillie 10 est disposée contre le cran anti-extraction 11.

Selon la réalisation représentée, la saillie 10 comprend un premier pan 12 de crantage horizontal. En variante non représentée, le pan 12 peut présenter une légère inclinaison par rapport à l'horizontale, l'angle entre ledit pan et la partie de tige 2 qui le surplombe étant inférieur à 90°, de manière à créer un effet de harpon.

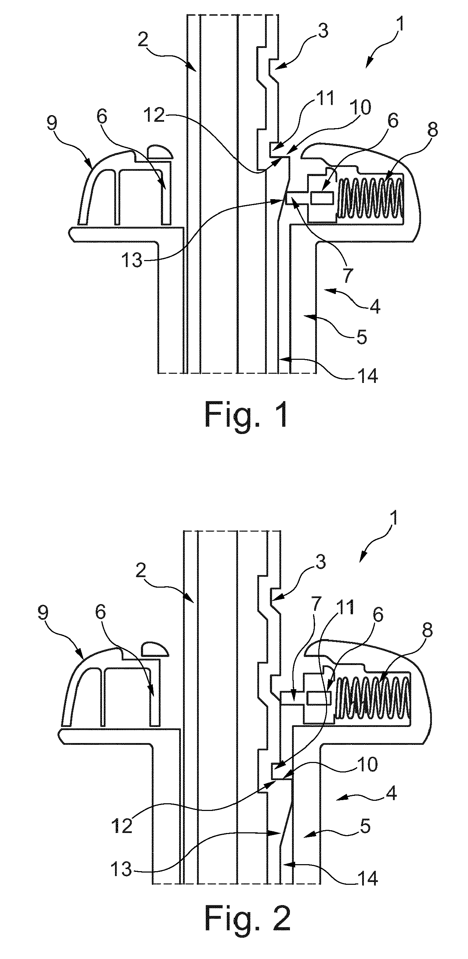

Selon la réalisation représentée, la saillie 10 comprend un deuxième pan 13 - disposé ici en dessous du premier pan 12 - biseauté de manière à permettre un montage de la tige 2 dans la gaine 4, comme représenté en figure 1, sans avoir à actionner la pièce de blocage 6.

Le démontage de la tige 2 hors de la gaine 4 se fait par traction radiale vers l'extérieur effectuée sur le bord de blocage 7, de manière à désengager ledit bord de la saillie 10.

Selon la réalisation représentée, la saillie 10 est formée par une déformation radiale - notamment par pincement - de la tige 2, qui est ici en tube métallique.

Selon une réalisation non représentée, la saillie 10 est formée par un élément distinct de la tige 2, notamment un élément en matériau plastique surmoulant ladite tige ou bien une pièce métallique associée par soudure ou rivetage sur ladite tige.

Selon une réalisation, la saillie s'étend sur une hauteur comprise entre 2 et 10 mm.

Selon la réalisation représentée, le manchon 5 est pourvu d'une rainure 14 interne de passage de la saillie 10 lors du coulissement de la tige 2.

On notera accessoirement que la rainure 14 peut servir de détrompeur pour empêcher l'utilisateur de monter son appui-tête à l'envers, face d'appui de la tête dirigée vers l'arrière du véhicule.

De façon non représentée, on peut prévoir que l'appui-tête comprenne deux tiges 2 parallèles pourvues chacune d'une saillie 10, ceci de manière à optimiser l'efficacité de la fonction d'anti extraction.

La gaine 4 recevant la deuxième tige 2 peut notamment être pourvue d'une pièce de blocage 6 actionnable uniquement par un outil lorsque l'on souhaite démonter l'appui-tête du siège, ceci afin de permettre le respect de réglementations qui interdisent le démontage dudit appui-tête sans outil.

On décrit enfin un siège de véhicule automobile comprenant un tel système 1, la gaine 4 étant montée en haut de dossier dudit siège et la tige 2 saillant d'un coussin de l'appui-tête.

## Revendications

1. Système (1) de montage d'appui-tête pour siège de véhicule automobile, ledit système comprenant au moins une tige (2) - notamment en tube métallique - de montage dudit appui-tête sur un dossier dudit siège, ladite tige comprenant au moins un cran de réglage (3) en hauteur dudit appui-tête, ledit système comprenant en outre une gaine (4) de réception en coulissement de ladite tige, ladite gaine comprenant :
• un manchon (5) de réception de ladite tige en coulissement,
• une pièce de blocage (6) montée mobile en translation radiale sur ledit manchon, ladite pièce comprenant un bord de blocage (7) agencé pour pouvoir s'insérer dans ledit cran,
• un ressort (8) actionnant ladite pièce de sorte que ledit bord soit repoussé vers ladite tige, ladite pièce présentant une position radiale de coulissement, dans laquelle ledit bord peut coulisser contre ladite tige, et une position radiale de crantage, où ledit bord s'insère dans ledit cran de manière à bloquer ladite tige en coulissement,
• un moyen de déblocage (9) - notamment sous forme de bouton poussoir solidaire de ladite pièce - permettant un positionnement de ladite pièce en position de coulissement afin de permettre le coulissement de ladite tige,
ledit système étant **caractérisé en ce que** ladite tige est pourvue d'une saillie (10) radiale agencée pour pouvoir se mettre en butée avec ledit bord lorsque ladite pièce est en position radiale de coulissement, de manière à empêcher une extraction non voulue de ladite tige hors dudit manchon.

2. Système selon la revendication 1, **caractérisé en ce que** la tige (2) comprend un cran anti-extraction (11), la saillie (10) étant disposée par rapport audit cran de manière à garantir un maintien de ladite tige dans la gaine (4) dans le cas où le bord de blocage (7) ne s'insère pas dans ledit cran.

3. Système selon la revendication 2, **caractérisé en ce que** la saillie (10) est disposée contre le cran anti-extraction (11).

4. Système selon l'une quelconque des revendications 1 à 3, **caractérisé en ce que** la saillie (10) comprend un premier pan (12) de crantage horizontal ou en légère inclinaison par rapport à l'horizontale, l'angle entre ledit pan et la partie de tige (2) qui le surplombe étant inférieur à 90°, de manière à créer un effet de harpon.

5. Système selon l'une quelconque des revendications 1 à 4, **caractérisé en ce que** la saillie (10) comprend un pan (13) biseauté de manière à permettre un montage de la tige (2) dans la gaine (4) sans avoir à actionner la pièce de blocage (6).

6. Système selon l'une quelconque des revendications 1 à 5, **caractérisé en ce que** la saillie (10) est formée par une déformation radiale de la tige (2).

7. Système selon l'une quelconque des revendications 1 à 5, **caractérisé en ce que** la saillie (10) est formée par un élément distinct de la tige (2), notamment un élément en matériau plastique surmoulant ladite tige ou bien une pièce métallique associée par soudure ou rivetage sur ladite tige.

8. Système selon l'une quelconque des revendications 1 à 7, **caractérisé en ce que** le manchon (5) est pourvu d'une rainure (14) interne de passage de la saillie (10) lors du coulissement de la tige (2).

9. Siège de véhicule automobile comprenant un système (1) selon l'une quelconque des revendications précédentes, la gaine (4) étant montée en haut de dossier dudit siège et la tige (2) saillant d'un coussin de l'appui-tête.
